Europäisches Patentamt

European Patent Office

Office européen des brevets

(19)

(11) Veröffentlichungsnummer: **0 244 661 B1**

(12) **EUROPÄISCHE PATENTSCHRIFT**

(45) Veröffentlichungstag der Patentschrift: 28.08.91

(51) Int. Cl.⁵: **A22C 13/00**

(21) Anmeldenummer: 87105241.1

(22) Anmeldetag: 09.04.87

(54) **Essbare Folie aus Kollagen mit einem Gehalt an Gluten, insbesondere Weizen-Gluten, Verfahren zu ihrer Herstellung und Verwendung der Folie zur Umhüllung von Lebensmitteln.**

(30) Priorität: 18.04.86 DE 3613057

(43) Veröffentlichungstag der Anmeldung:
11.11.87 Patentblatt 87/46

(45) Bekanntmachung des Hinweises auf die
Patenterteilung:
28.08.91 Patentblatt 91/35

(84) Benannte Vertragsstaaten:
AT BE CH DE ES FR GB GR IT LI LU NL SE

(56) Entgegenhaltungen:
EP-A- 0 070 940
DE-A- 1 492 641
DE-A- 1 492 643
DE-A- 2 134 960
US-A- 3 653 925

(73) Patentinhaber: Naturin GmbH & Co
Badeniastrasse 13
W-6940 Weinheim/Bergstrasse(DE)

(72) Erfinder: Maser, Franz
Wintergasse 27
W-6940 Weinheim Bergstrasse(DE)

(74) Vertreter: Klöpsch, Gerald, Dr.-Ing. Patentanwälte Klöpsch & Flaccus
An Gross St. Martin 6
W-5000 Köln 1(DE)

**Beschreibung**

Die Erfindung betrifft eßbare Folien (Schlauch- und Flachfolien) auf Kollagenbasis, in denen ein Teil des Kollagens durch Gluten, insbesondere Weizen-Gluten ersetzt ist, ein Verfahren zur Herstellung dieser Folien und ihre Verwendung zur Umhüllung von Lebensmitteln, insbesondere von Fleisch- und Fischwaren.

Gluten ist das Kleber-Eiweiß der Brotgetreide (Römpps Chemie-Lexikon 8. Auflage, Seite 1511). Ein typisches Gluten ist das Weizengluten, in der Bundesrepublik unten dem Handelsnamen Weizen-Vital-Kleber bekannt (WVK). Weizengluten stellt insgesamt die Proteinfraktion des Weizenkorns dar, die sich aus verschiedenen Eiweißkomponenten zusammensetzt. Es wird bei der Gewinnung von Weizenstärke aus Weizenmehl als Nebenprodukt erhalten. Dazu wird Weizenmehl mit Wasser angeteigt und unter dauerndem Kneten die Stärke-Fraktion durch Spülen mit Wasser als "Stärkemilch" abgeschlämmt. Der Weizenkleber, der etwa 85% des Gesamtproteins des Weizenmehls enthält, bleibt in der Form des leichtverderblichen Feuchtklebers als unbeständige kohäsiv-elastische Masse mit einem Wassergehalt von etwa 60 bis 70% zurück und wird vorwiegend unter möglichst schonenden Bedingungen zum lagerfähigen Produkt mit einer durchschnittlichen Feuchtigkeit von 6 bis 7% getrocknet. Der Proteingehalt des in Deutschland hergestellten Klebers liegt über 80% (N . 6,25) bzw. 85%, bezogen auf Trockensubstanz. Der Rest sind Fette, Kohlenhydrate und Mineralstoffe.

Schlauchfolien, die insbesondere als Wursthüllen verwendet werden, sowie Flachfolien aus Kollagen sind bereits seit langem bekannt. Sie werden aus einer Kollagenmasse, die durch Aufschluß aus Tierhäuten gewonnen wird, auf bekannte Weise hergestellt. Ausgangsmaterial ist dabei eine Kollagenmasse mit einem Kollagengehalt von ca. 2 bis 15% Trockenkollagen, die dann auf bekannte Weise zur Folie verformt wird. Bei verdünnteren Kollagenmassen mit Kollagengehalten von beispielsweise 2 bis 5 % wird die Kollagenfolie in einem Fällbad koaguliert (sogenanntes Naßverfahren), während Kollagenmassen mit höherem Kollagengehalt von beispielsweise 10 bis 12% ohne Verwendung eines Koagulierbades aus der Masse zu einem selbsttragenden Schlauch extrudiert werden.

Wursthüllen aus Kollagen haben den Vorzug eßbar zu sein, so daß sie deswegen eine weite Verbreitung gefunden haben.

Es wurde schon mehrfach versucht, Kollagen in diesen Wursthüllen teilweise oder ganz durch andere Stoffe zu ersetzen. Ein Beispiel dafür sind Wursthüllen aus Cellulosehydrat, die allerdings den Nachteil haben, nicht eßbar zu sein, so daß sie vom Würstchenhersteller vor der Abgabe an den Verbraucher vom Würstchen abgezogen werden müssen. Es wurde auch schon versucht, das eßbare Kollagen in Wursthüllen durch andere eßbare Materialien wie Amylose, Alginsäure bzw. Calciumalginat oder Milcheiweiß zu ersetzen. Allerdings haben diese Hüllen, obwohl sie prinzipiell eßbar sind, keine praktische Bedeutung erlangt, weil die Kollagenersatzprodukte nicht die günstigen Verarbeitungs- und Gebrauchseigenschaften wie reines Kollagen aufweisen. Es hat sich vielmehr gezeigt, daß solche Ersatzprodukte für Kollagen oder Produkte, in denen das Kollagen teilweise durch Zusätze ersetzt worden ist, die physikalischen Prüfwerte und die Gebrauchseigenschaften der reinen Kollagenfolie nicht erreichen.

Aufgabe der Erfindung ist es daher, eine Folie bereitzustellen, in der ein erheblicher Anteil des Kollagens durch einen leicht zugänglichen, preiswerten Zusatz ersetzt werden kann, ohne daß die günstigen Eigenschaften der reinen Kollagenfolie verschlechtert wird.

Unter Folie werden nachfolgend sowohl Flach- als auch Schlauchfolien verstanden.

Diese Aufgabe wird erfindungsgemäß durch eine Folie gelöst, die, bezogen auf 100 Gew.-Teile Trockenkollagen, 1 bis 100 Gew.-Teile, bevorzugt 2 bis 50 und insbesondere 5 bis 20 Gew.-Teile Gluten enthält.

Zwar ist die Verwendung von Gluten zur Herstellung von Lebensmittelverpackungen bereits bekannt, es handelt sich hierbei jedoch entweder um verpackungen, z.B. Kochbeutel, aus reinem Gluten wie in der US-PS 3,062,664 beschrieben oder aus Folien, die neben Gluten als weitere Bestandteile bis zu 50% andere Pflanzen-Proteine, z.B. Zein oder Soja-Protein enthalten, wie in der US-A- 3 653 925 beschrieben. Solche Folien werden aus einer ammoniakalischen, wässrig-alkoholischen Dispersion unter Verwendung eines Weichmachers gegossen.

Überraschenderweise werden durch den Zusatz von Gluten zu Kollagen im Gegensatz zu anderen untersuchten Proteinen, wie z.B. Soja-Protein, Zein,Keratin, Casein oder Blutplasma die physikalischen Eigenschaften und Gebrauchseigenschaften des Kollagens nicht negativ beeinflußt, vielmehr weisen die erfindungsgemäßen Wursthüllen und Folien trotz eines erheblichen Glutenanteils praktisch die gleichen Eigenschaften wie die reine Kollagenfolie auf. So wird insbesondere die Reißfestigkeit nicht beeinträchtigt. Dies war nicht vorhersehbar, da durch kollagenfremde Zusätze wie Cellulose oder zur Färbung verwendete Pigmente die mechanische Festigkeit des Kollagens bekanntlich verschlechtert wird und auch durch den Zusatz anderer Proteine diese Verschlechterung der Eigenschaften des Kollagens eintritt. Weiterhin wird überraschenderweise durch den Glutenzusatz die thermische Schweißbarkeit des Produkts verbessert.

Da Folien mit einem Glutengehalt bis zu 50 Gew.-% noch durchaus akzeptable Eigenschaften haben, bedeutet die Verwendung von Gluten, das nur etwa halb so teuer wie Kollagen und leicht zugänglich ist, eine erhebliche Kosteneinsparung. Ein weiterer Vorteil der erfindungsgemäßen Folie hat sich in anwendungstechnischen Tests gezeigt:

Durch den Glutenzusatz werden Eigenschaftsschwankungen von Kollagenmassen, die aus der unterschiedlichen Provenienz und Vorgeschichte der Kollagen-Quellen stammen, weitgehend nivelliert.

Die Herstellung der erfindungsgemäßen Folien erfolgt nach einem ebenfalls zur Erfindung gehörenden Verfahren durch Einmischen von 1 bis 100 Gew.-Teilen Gluten, bezogen auf 100 Gew.-Teile Trockenkollagen, in die Kollagenmasse, worauf die so erhaltene Mischung auf an sich bekannte Weise zu einer Schlauchbzw. Flachfolie verformt wird.

Besonders vorteilhaft hat sich dabei das Einmischen des Glutens als saure Dispersion erwiesen. Dies war angesichts des Standes der Technik nicht naheliegend, da bisher Gluten stets aus alkalischer Dispersion zur Folie verarbeitet wurde.

Durch die Zumischung des Glutens in saurer Dispersion wird der pH-Wert der vorgelegten Kollagenmasse, der bei 2,5 bis 3,0 liegt, praktisch nicht geändert, was vorteilhaft ist.

Vorteilhaft wird das Gluten in verdünnter, wässrig-saurer Dispersion eingesetzt. Solche verdünnten Dispersionen mit Glutengehalten bis zu 20 Gew.-% in 1n Essigsäure sind dünnflüssig und homogen, mit höherer Konzentration bis etwa 27 Gew.-% mittelviskos und ebenfalls homogen. Bevorzugt wird erfindungsgemäß das Gluten in 10 %iger Dispersion in 1n Essigsäure durch Dispergieren mittels geeigneter Apparaturen (z.B. dem Ultraturrax (Jahnke u. Kunkel, Staufen/Breisgau)) hergestellt und im gewünschten Mischungsverhältnis in eine fahrfertige Kollagenmischung eingearbeitet.

Die verwendete Kollagenmasse kann je nach Verfahrensweise mehr oder weniger Kollagen, berechnet als Trokkenkollagen, enthalten. Eine verdünntere Kollagenmasse weist im Regelfall einen Kollagengehalt von 2 bis 6% auf, und wird nach dem sogenannten Naßverfahren verarbeitet. Eine höher konzentrierte Kollagenmasse enthält etwa 6 bis 12 % Trockenkollagen. Man spricht bei der Verarbeitung solcher Massen vom Trockenverfahren. Für das erfindungsgemäße Verfahren können Kollagengehalte entsprechend einem Trockengewicht von 0,5-15 Gew % verwendet werden.

Die erfindungsgemäße Folie kann neben Kollagen und Gluten weitere Bestandteile, wie Weichmacher, Füllstoffe und/oder Gerbmittel enthalten. Als Weichmacher sind neben Glycerin auch Propylenglykol und Sorbit sowie Gemische aus diesen Verbindungen geeignet. Die Weichmachermenge beträgt, bezogen auf Trockenkollagen, 0 bis 50, vorzugsweise 5 bis 40 Gew.-%. Der Füllstoffzusatz liegt im Bereich von 0 bis 40, vorzugsweise 5 bis 30 Gew.-%. Als Füllstoff ist besonders Cellulosepulver geeignet. An Gerbmitteln enthält die Folie 0 bis 5, vorzugsweise 0,01 bis 4 und insbesondere 0,1 bis 3 Gew.-%, wieder bezogen auf Trockenkollagen. Als Gerbmittel sind beispielsweise Aldehyde, wie Glutaraldehyd oder solche Aldehyde enthaltende Flüssigkeiten, wie Holzrauchdestillat, als auch Metallsalze oder Aldehyd/Metallsalzmischunge geeignet.

Während Bestandteile wie Füllstoffe und ein Teil des Weichmachers sowie ggf. Aldehyde als Gerbmittel der Kollagen-Ausgangsmasse zugemischt werden, erfolgt die weitere Gerbung vorteilhaft durch Behandeln der fertigen Folie mit einer wässrigen Gerbmittellösung, beispielsweise Aluminiumsulfatlösung.

Eine zur Herstellung von als Wursthüllen verwendeten Schlauchfolien geeignete Kollagenmischung enthält z.B. 6 bis 10 Gew.-% Kollagen, berechnet auf TrockenKollagen, 5 bis 30 Gew.-% Cellulosepulver, (als Füllstoff), 10 bis 40 % Weichmacher, sowie 0,01 bis 1,0% Aldehyde, jeweils bezogen auf Trocken-Kollagen.

Nach dem homogenen Vermischen von Gluten mit dem wasserhaltigen Kollagen wird die erhaltene Masse dann auf an sich bekannte Weise zu Schlauch- oder Flachfolie verformt. Der Herstellung der Schlauchfolie entweder durch Ausfällen einer verdünnteren Kollagenlösung in einem Koagulierbad oder durch Extrudieren einer höher konzentrierten Masse durch einen Extruder mit dem eine Längs- und Querorientierung der Kollagenfasern im extrudierten Schlauch erreicht wird, schliessen sich dann bekannte weitere Bearbeitungs- bzw. Konfektionierungsstufen wie Trocknen, Gerben, Hitzehärten und Raffen an.

Die so hergestellten Mischungen aus Kollagen und Gluten unterscheiden sich bei der Herstellung von eßbaren Wursthüllen nicht von reinen Kollagenmassen ohne Glutenzusatz. In allen Herstellungstufen (Extrudieren, Trocknen im Trockenkanal, Härten, Klimatisieren und Raffen) verhalten sich die entstandenen Wursthüllen wie die entsprechenden Hüllen ohne Gluten-Zusatz.

Zur Herstellung von eßbaren Kollagenfolien werden wässrige Suspensionen mit 0,5 bis 4 % Kollagen zubereitet. Neben Kollagen enthält diese Masse 0 bis 30% Cellulosepulver, 10 bis 40 % Weichmacher, 0 bis 1% Aldehyde, berechnet auf Trocken-Kollagen. Außerdem werden 1 bis 50%, vorzugsweise 10 bis 30% Gluten als 10%ige Dispersion in 1n Essigsäure in die Kollagenmasse eingearbeitet.

3

Bei der Produktion von eßbaren Kollagenfolien besteht kein Unterschied im Verhalten zwischen Folien mit und solchen ohne Gluten-Zusatz.

Die Erfindung wird anhand der nachfolgenden Beispiele näher erläutert:

Beispiel 1:

a) 500 kg gesiebter Kollagenmasse mit einem Trockenstoff-Gehalt (TG) von 13,60% und einem pH-Wert von 3,04 wurden mit den folgenden Zutaten gemischt:

| | | |
|---|---|---|
| Cellulosepulver | | 5,0 kg |
| Wasser | | 281,75 l |
| Glycerin | | 20,25 l |
| Salzsäure, | 30 %ig | 0,9 l |

Es wurde eine Saitlingsmasse mit einem Trockenstoffgehalt von 11,62 % erhalten.

b) Zum Herstellen einer Gluten-Dispersion wurden 100 Teile 1n Essigsäure vorgelegt und dazu langsam 11 Teile handelsübliches Gluten zugefügt und mit dem Ultraturrax homogenisiert.

c) 100 Teile fertiger Saitlingsmasse mit einem Kollagen-Gehalt von 8,4 Teilen wurden im Z-Kneter vorgelegt und durch langsames Zulaufenlassen mit 8,4 Teilen Gluten-Dispersion von b) innig vermischt.

d) Die erhaltene Masse wurde in üblicher Weise durch eine Ringdüse von 21 mm Durchmesser und 0,45 mm Spaltweite mit rotierendem Kern gemäß DE-A- 650 887 in Luft extrudiert, der entstehende Schlauch von innen mit Luft aufgeblasen und durch einen Trockenkanal geführt. Nach dem ersten Trocknen wurde der Schlauch mit glycerinhaltiger Bicarbonat-Lösung neutralisiert, mit Wasser gewaschen, wieder getrocknet und flach aufgewickelt. Schließlich wurde der Schlauch langsam erhitzt und 4 Std. bei 90 °C hitzegehärtet.

e) Anschließend wurden die Hüllen in üblicher Weise mit Wiener-Brät und mit Bratwurstbrät unterschiedlicher Rezeptur gefüllt und gegart. Beim Brühen und beim Braten der Würstchen unterschieden sich diese Hüllen nicht von auf gleiche Weise hergestellten Wursthüllen ohne Zusatz von Gluten.

f) Die physikalischen Werte der erhaltenen Hüllen wurden in Tabelle 1 dargestellt.

Tabelle 1 Physikalische Daten von eßbaren Kollagen-Wursthüllen mit verschiedenem Gehalt an handelsüblichen Gluten (WVK)

| Beispiel | WKV % | Kaliber mm | Spalt mm | Gewicht g/m | Reißwert trockene Hülle | | Dehnung trockene Hülle | | Reißwert nasse Hülle | | Dehnung nasse Hülle | | Quellung % |
|---|---|---|---|---|---|---|---|---|---|---|---|---|---|
| | | | | | längs N | quer N | längs % | quer % | längs N | quer N | längs % | quer % | |
| 1 | 10 | 21 | 0,45 | 1,48 | 29,3 | 14,2 | 15,6 | 26,3 | 6,0 | 6,1 | 32,5 | 49,8 | 209 |
| 2 | 20 | 21 | 0,45 | 1,37 | 26,5 | 14,9 | 12,9 | 22,6 | 5,9 | 5,4 | 27,6 | 46,2 | 197 |
| Vgl. 1 | 0 | 21 | 0,45 | 1,36 | 32,9 | 16,6 | 14,6 | 27.0 | 6,5 | 6,3 | 28,1 | 45,7 | 241 |
| 3 | 10 | 23 | 0,5 | 1,73 | 34,0 | 15,7 | 15,8 | 23,6 | 6,5 | 6,1 | 27,4 | 44,9 | 220 |
| 4 | 20 | 23 | 0,6 | 1,66 | 32,6 | 15,6 | 14,1 | 17,9 | 6,8 | 6,1 | 26,6 | 43,6 | 200 |
| Vgl. 2 | 0 | 23 | 0,6 | 1,75 | 30,9 | 16,2 | 13,4 | 24,8 | 5,8 | 6,5 | 27,9 | 47,7 | 232 |

Das Beispiel 1 wurden mit anderen Düsenabmessungen und/oder Verdoppelung des Gluten-Anteils gemäß folgendem Schema wiederholt:

| Beispiel | Gluten % | Kaliber/Spalt 21 mm | 0,45 mm | Kaliber/Spalt 23 mm | 0,6 mm |
|----------|----------|---------------------|---------|---------------------|--------|
| 1 | 10 | X | X | | |
| 2 | 20 | X | X | | |
| Vgl.1 | 0 | X | X | | |
| 3 | 10 | | | X | X |
| 4 | 20 | | | X | X |
| Vgl.2 | 0 | | | X | X |

Zum Einmischen von 20 % Gluten wurden 100 Teile Kollagenmasse mit 16,8 Teilen der Gluten-Dispersion von 1a) vermischt .

Bei der praktischen Erprobung in der anwendungstechnischen Abteilung zeigten die erhaltenen Hüllen ebenso gute Eigenschaften wie die üblichen Kollagenhüllen ohne Gluten. Ihre physikalischen Werte ähneln denen der Vergleichsbeispiele und sind in Tabelle 1 mit aufgeführt.

Beispiel 5

b) 100 Teile fertiger Kollagenmasse mit einem Kollagengehalt von 2 % wurden in einem Behälter mit Mischturbine vorgelegt und mit 4 Teilen handelsüblicher Weizengluten-Dispersion (WVK) von Beispiel 1 a) innig vermischt.

c) Die erhaltene Masse mit 20 % Weizengluten, berechnet auf Kollagen, wurde durch eine Schlitzdüse mit einem Spalt von 0,4 m Länge und 0,5 mm Weite auf ein endloses Kunststoffband extrudiert und mit 10 m/min bei 60 °C Lufttemperatur durch einen Trockenkanal geführt. Danach wurde die Folie vom Band abgenommen und auf Rollen aufgewickelt.

d) In der anwendungstechnischen Abteilung wurden die Folien zum Umhüllen von "Kochschinken im Netz" mit einer Vorrichtung entsprechend EP-A- 0175173 ausprobiert und verhielten sich ebenso gut wie herkömmliche Kollagenfolien ohne Gluten-Zumischung.

e) Die physikalischen Werte der erhaltenen Folie sind in der nachfolgenden Tabelle 2 dargestellt:

**Physikalische Werte von Kollagenfolien mit 20% Gluten**

| Beispiel | Gluten-Gehalt % | Reißwerte, trockene Folien längs N | quer N |
|----------|-----------------|------------------------------------|--------|
| 5 | 20 | 6,7 | 9,4 |
| Vgl.3 | 0 | 6,8 | 9,7 |

**Patentansprüche**

1. Eßbare Folie auf Kollagenbasis, dadurch gekennzeichnet, dass sie, bezogen auf 100 Gew.-Teile trockenes Kollagen 1 bis 100, vorzugsweise 2 bis 50 und insbesondere 5 bis 20 Gew.-Teile Gluten enthält.

2. Folie nach Anspruch 1, dadurch gekennzeichnet, dass sie Weichmacher in einer Menge von 0 bis 50, vorzugsweise 5 bis 40 Gew.-%, Füllstoffe in einer Menge von 0 bis 40, vorzugsweise 5 bis 30 Gew.-% und Gerbmittel in einer Menge von 0 bis 5, vorzugsweise 0,01 bis 4 und insbesondere 0,1 bis 3 Gew.-%, bezogen auf Trockenkollagen, enthält.

3. Folie nach einem der Ansprüche 1 bis 2, dadurch gekennzeichnet, dass sie als Weichmacher Glycerin, Propylenglykol , Sorbit oder ein Gemisch dieser Verbindungen enthält.

4. Folie nach einem der Ansprüche 1 bis 3, dadurch gekennzeichnet, dass sie als Füllstoff Cellulosepulver enthält.

5. Folie nach einem der Ansprüche 1 bis 4, dadurch gekennzeichnet, dass sie als Gerbmittel Aldehyde und/oder Metallsalze, vorzugsweise Aluminiumsalze, enthält.

6. Folie nach einem der Ansprüche 1 bis 5, dadurch gekennzeichnet, dass sie Weizen-Gluten enthält.

7. Verfahren zur Herstellung von Folien nach einem der Ansprüche 1 bis 6, dadurch gekennzeichnet, dass man in eine Kollagenmasse 1 bis 100 Gew.-Teile, bezogen auf 100 Gew.-Teile Trockenkollagen, Gluten einmischt und die so erhaltene Mischung auf an sich bekannte Weise zu einer Schlauch- bzw. Flachfolie verformt.

8. Verfahren nach Anspruch 7, dadurch gekennzeichnet, dass man eine Kollagenmasse verwendet, deren Anteil an Kollagen einem Trockengewicht von 0,5-15 Gew % entspricht.

9. Verfahren nach Ansprüchen 7 bis 8, dadurch gekennzeichnet, dass man, bezogen auf 100 Gew.-Teile Trockenkollagen, 2 bis 50, vorzugsweise 5 bis 20 Gew.-Teile Gluten einarbeitet.

10. Verfahren nach einem der Ansprüche 7 bis 9, dadurch gekennzeichnet, dass als Gluten Weizen-Gluten verwendet wird.

11. Verfahren nach einem der Ansprüche 7 bis 10, dadurch gekennzeichnet, dass das Gluten in wässrig/saurer Dispersion in die Kollagenmasse eingearbeitet wird.

12. Verfahren nach einem der Ansprüche 7 bis 11, dadurch gekennzeichnet, dass die Folie durch Einarbeiten eines Gerbmittels in die Masse vor der Verformung zur Folie und/oder durch Besprühen der fertigen Folie mit einer Gerbstofflösung gegerbt wird.

13. Verwendung einer Schlauchfolie nach Ansprüchen 1 bis 6 als Wursthülle.

14. Verwendung einer Flachfolie nach Ansprüchen 1 bis 6 zur Umhüllung von Lebensmitteln, insbesondere Fleisch- und Fischwaren.

**Claims**

1. An edible film based on collagen, characterized in that, relative to 100 parts by weight of dry collagen, it contains 1 to 100, preferably 2 to 50, and in particular 5 to 20 parts by weight of gluten.

2. The film according to claim 1, characterized in that it contains softening agents in a quantity of 0 to 50, preferably 5 to 40%-wt., filling agents in a quantity of 0 to 40, preferably 5 to 30%-wt., and tanning agents in a quantity of 0 to 5, preferably 0.01 to 4, and in particular 0.1 to 3%-wt., relative to the dry collagen.

3. The film according to any one of claims 1 to 2, characterized in that it contains glycerol, propylene glycol, sorbitol, or a mixture of these compounds as softener.

4. The film according to any one of claims 1 to 3, characterized in that it contains cellulose powder as

7

filler.

5. The film according to any one of claims 1 to 4, characterized in that it contains aldehydes and/or metallic salts, preferably aluminium salts, as tanning agents.

6. The film according to any one of claims 1 to 5, characterized in that it contains wheat gluten.

7. A process for the production of films as defined in any one of claims 1 to 6, characterized in that 1 to 100 parts by weight of gluten, relative to 100 p/wt. of dry collagen, is mixed into a collagen mass, and that the mixture so obtained is deformed in a manner known per se to form a tubular or flat film.

8. The process according to claim 7, characterized in that a collagen mass is used the collagen portion of which corresponds to a dry weight of 0.5 to 15%-wt.

9. The process according to any one of claims 7 to 8, characterized in that, relative to 100 parts by weight of dry collagen, 2 to 50, preferably 5 to 20 p/wt. of gluten is incorporated.

10. The process according to any one of claims 7 to 9, characterized in that wheat gluten is used as the gluten.

11. The process according to any one of claims 7 to 10, characterized in that the gluten is incorporated into the collagen mass in an aqueous/acidic dispersion.

12. The process according to any one of claims 7 to 11, characterized in that the film is tanned by incorporating a tanning agent into the mass prior to the formation of the film and/or by spraying the finished film with a solution of a tanning agent.

13. The use of a tubular film as defined in any one of claims 1 to 6 as a sausage casing.

14. The use of a flat film as defined in any one of claims 1 to 6 for encasing foodstuffs, in particular meat and fish products.

**Revendications**

1. Feuille comestible à base de collagène, caractérisée en ce qu'elle contient, par rapport à 100 parties en poids de colagène, sec, 1 à 100 parties en poids, de préférence 2 à 50 parties en poids et, plus particulièrement 5 à 20 parties en poids, de gluten.

2. Feuille suivant la revendication 1, caractérisée en ce qu'elle contient des plastifiants en une proportion de 0 à 50% en poids, de préférence 5 à 40% en poids, des charges en une proportion de 0 à 40% en poids, de préférence 5 à 30% en poids et des tannants en une proportion de 5% en poids, de préférence 0,01 à 4% en poids et plus particulièrement 0,1 à 3% en poids, par rapport au collagène sec.

3. Feuille suivant l'une des revendications 1 à 3, caractérisée en ce qu'elle contient, à titre de plastifiant, de la glycérine, du propylèneglycol, de la sorbite, ou un mélange de ces composés.

4. Feuille suivant l'une quelconque des revendications 1 à 3, caractérisée en ce qu'elle contient de la poudre de cellulose à titre de charge.

5. Feuille suivant l'une quelconque des revendications 1 à 4, caractérisée en ce qu'elle contient, à titre de tannants, des aldéhydes et/ou des sels de métaux, de préférence des sels d'aluminium.

6. Feuille suivant l'une quelconque des revendications 1 à 5, caractérisée en ce qu'elle contient du gluten de blé ou froment.

7. Procédé de fabrication de feuilles selon l'une quelconque des revendications 1 à 6, caractérisé en ce que l'on incorpore de 1 à 100 parties en poids de gluten à une masse de collagène, par rapport à 100 parties en poids de collagène sec et on transforme le mélange ainsi obtenu en une feuille plane ou tubulaire de manière connue.

8. Procédé suivant la revendication 7, caractérisé en ce que l'on utilise une masse de collagène dont la fraction en collagène correspond à un poids à sec de 0,5 à 15% en poids.

9. Procédé suivant les revendications 7 à 9, caractérisé en ce que l'on incorpore de 2 à 50 parties en poids, de préférence 5 à 20 parties en poids, de gluten, par rapport à 100 parties en poids de collagène sec.

10. Procédé suivant l'une quelconque des revendications 7 à 9, caractérisé en ce que l'on utilise du gluten de blé ou froment à titre de gluten.

11. Procédé suivant l'une quelconque des revendications 7 à 10, caractérisé en ce que l'on incorpore le gluten à la masse de collagène sous forme d'une dispersion aqueuse/acide.

12. Procédé suivant l'une quelconque des revendications 7 à 11, caractérisé en ce que l'on tanne la feuille par l'incorporation d'un tannant à la masse avant la transformation en feuille et/ou la pulvérisation d'une solution de tannant sur la feuille prête.

13. Utilisation d'une feuille tubulaire selon les revendications 1 à 6, à titre d'enveloppe ou boyau pour saucisse.

14. Utilisation d'une feuille plane selon les revendications 1 à 6 pour l'enrobage de produits alimentaires, plus particulièrement les produits à base de viande et de poisson.